# EUROPÄISCHE PATENTSCHRIFT

(11) **EP 4 122 724 B1**
(45) Veröffentlichungstag und Bekanntmachung des Hinweises auf die Patenterteilung: **25.02.2026**
(21) Anmeldenummer: 22172720.9
(22) Anmeldetag: 11.05.2022
(51) Int. Cl.: B60D 1/60, B60P 1/26, B60P 1/28

(54) **RÜCKWANDABWEISER**
REAR WALL DEFLECTOR
DISPOSITIF DE PROTECTION DE MUR ARRIÈRE

(30) Priorität: 19.07.2021 DE 102021118592
(43) Veröffentlichungstag der Anmeldung: 25.01.2023
(73) Patentinhaber: Franz Xaver Meiller Fahrzeug- und Maschinenfabrik - GmbH & Co KG, 80997 München (DE)
(72) Erfinder: Popp, Klaus, 82346 Andechs (DE)
(74) Vertreter: Weickmann & Weickmann PartmbB

(56) Entgegenhaltungen:
- DE-A1- 3 600 506
- DE-U1- 202010 001 276
- DE-U1- 29 602 104

## Beschreibung

Die vorliegende Erfindung betrifft ein Abweiserelement zur Verwendung im Bereich einer klappbaren Rückwand eines Kipperfahrzeugs mit einer Kugelkopfkupplung.

Derartige klappbare Rückwände von Kipperfahrzeugen werden in der Regel bei einem Entladen des Ladebereichs des Kippaufbaus nach unten geklappt, so dass im hinteren Bereich der Ladefläche eine Öffnung zum Abkippen von Ladegütern, wie beispielsweise Schüttgut, vorliegt. Bei einem solchen Vorgang kippt die Rückwand zunächst einmal um eine Kippachse frei nach unten und hängt dann frei schwingend an dieser Position herab.

Gleichzeitig ist bekannt, dass in wenigstens manchen Modellen von Kipperfahrzeugen im Bereich der klappbaren Rückwand eine Kugelkopfkupplung verbaut sein kann, wie sie beispielsweise auch in PKW zum Anhängen von kleineren Anhängern verwendet wird. Eine derartige Kugelkopfkupplung muss in einer bestimmten Höhe über dem Fahruntergrund an dem Fahrzeug angebracht sein, damit die vorschriftsgemäße Ankopplung eines entsprechenden Anhängers ermöglicht ist.

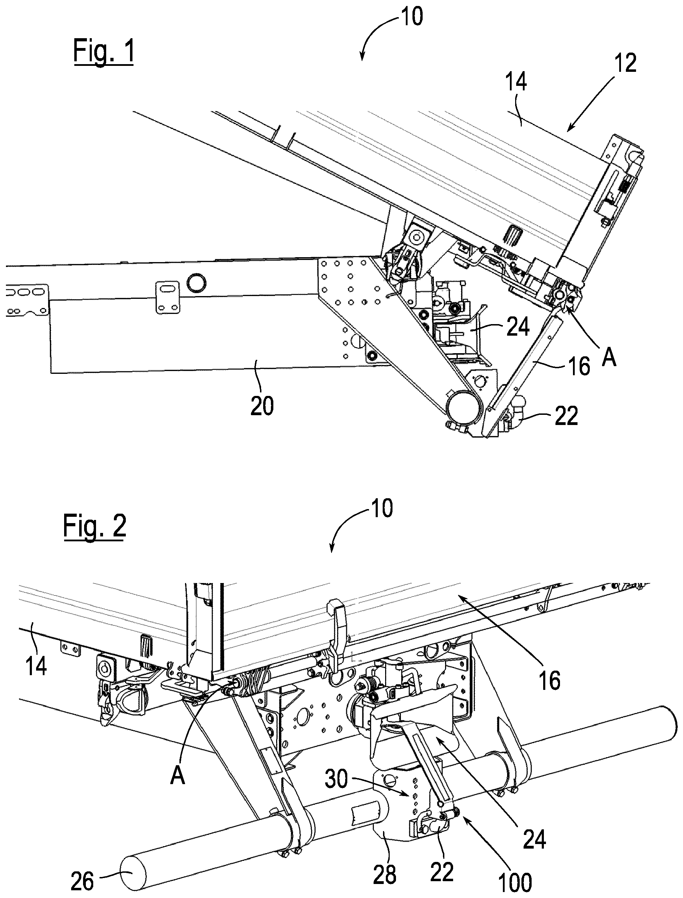

In dieser Konstellation hat sich jedoch gezeigt, dass es in manchen Anwendungsfällen, wie beispielsweise bei einem Abladen einer großen Menge von Schüttgut, bei welchem die Rückwand auf dem sich ergebenden Schüttguthaufen aufliegt und damit aus ihrer freischwingenden Position ausgelenkt wird, vorkommen kann, dass die in Figur 1 gezeigte Verhakung der Rückwand an der Kugelkopfkupplung auftritt, wenn der Kippaufbau nach dem vollendeten Abladen zurück in seine horizontale Position geschwenkt werden soll.

Hierbei zeigt die Figur 1 ein Kipperfahrzeug aus dem Stand der Technik, welches ganz allgemein mit dem Bezugszeichen 10 bezeichnet ist, und in welchem ein Kippaufbau 12 mit einer Ladefläche vorgesehen ist, die zwischen seitlichen Bordwänden 14 und einer klappbaren Rückwand 16 gebildet ist, welche wiederum um eine Klappachse A zum Entladen der Ladefläche schwenkbar ist.

Hierbei ist die kippbare Lagerung des Kipperaufbaus 12 um eine Kippachse gegenüber dem Fahrzeugkörper 20 bewerkstelligt, welcher in Figur 1 lediglich abschnittsweise dargestellt ist. Ferner ist jedoch zu erkennen, dass an diesem Fahrzeugkörper 20 im Heckbereich davon eine Kugelkopfkupplung 22 und schräg darüber eine Maulkupplung 24 in bekannter Weise installiert sind, wobei in der in Figur 1 gezeigten Konstellation der oben beschriebene problematische Fall eingetreten ist, dass beim Zurückschwenken des Kippaufbaus 12 in dessen horizontale Ausrichtung, die beispielsweise bei einer Fahrt des Kipperfahrzeugs 10 und einem Transport von Gütern eingenommen wird, zu einem Einklemmen der klappbaren Rückwand 16 in der durch die Kugelkopfkupplung 22 gebildeten Hinterschneidung gekommen ist, was bei einer weiteren Schwenkbewegung des Kippaufbaus 12 zu einem Verbiegen der Rückwand 16 oder gar einem Abreißen davon im Bereich seiner Kippachse führen könnte. In ähnlicher Weise könnte bei einem Ankippen des Kippaufbaus die abgeklappte Rückwand in den kritischen Bereich pendeln und sich verhaken, so dass sie bei einem weiteren Ankippvorgang beschädigt werden könnte.

Ferner sei auf die Druckschriften DE 296 02 104 U1, DE 36 00 506 A1 und DE 20 2010 001 276 U1 verwiesen, welche jeweils ebenfalls Vorrichtungen zur Verwendung mit einer Kugelkopfkupplung zu ähnlichen Zwecken lehren.

Es ist somit die Aufgabe der vorliegenden Erfindung, eine Vorrichtung bereitzustellen, mit welcher der oben beschriebene problematische Fall eines Verklemmens einer klappbaren Rückwand eines Kipperfahrzeugs an einer Kugelkopfkupplung verhindert werden kann, wobei das hierzu einzusetzende erfindungsgemäße Element möglichst einfach herzustellen und zu bedienen sowie kostengünstig sein soll.

Zu diesem Zweck umfasst das erfindungsgemäße Abweiserelement zur Verwendung im Bereich einer klappbaren Rückwand eines Kipperfahrzeugs mit einer Kugelkopfkupplung einen Körperabschnitt, welcher dazu eingerichtet ist, in montiertem Zustand des Abweiserelements eine Anlage für die Rückwand in ihrem heruntergeklappten Zustand zu bilden, sowie einen ersten Anbringungsbereich, welcher dazu eingerichtet ist, ein Anbringen des Abweiserelements an der Kugelkopfkupplung zu ermöglichen, um den montierten Zustand herzustellen, wobei sich der Körperabschnitt des Abweiserelements in dem montierten Zustand wenigstens abschnittsweise oberhalb der Kugelkopfkupplung erstreckt und diese wenigstens auf der zu der Rückwand weisenden Seite bedeckt.

Somit wird erfindungsgemäß durch das eben beschriebene Abweiserelement eine Möglichkeit geschaffen, im Bereich der Kugelkopfkupplung in einem Zustand, in welchem an sie kein Anhänger angekoppelt ist, allerdings ein Herunterklappen der Rückwand des Kipperfahrzeugs in Betracht kommt, eine physische Barriere zu schaffen, welche ein Eintreten des in Figur 1 gezeigten und oben beschriebenen problematischen Zustands zuverlässig verhindert.

Während es prinzipiell möglich ist, das Abweiserelement lediglich mittels des ersten Anbringungsbereichs an der Kugelkopfkupplung anzubringen und hierdurch die erfindungsgemäße Aufgabe zu lösen oder in einer alternativen Ausführungsform eine reine Abstützung des Abweiserelements an einer weiteren Komponente des Kipperfahrzeugs vorzusehen, so kann in einer besonders betriebssicheren Ausführungsform ferner ein zweiter Anbringungsbereich vorgesehen sein, welcher dazu eingerichtet ist, ein Anbringen des Abweiserelements an einer weiteren Komponente des Kipperfahrzeugs in dem montierten Zustand zu ermöglichen, welche sich oberhalb der Kugelkopfkupplung befindet.

Hierbei kann insbesondere daran gedacht werden, den zweiten Anbringungsbereich derart einzurichten, dass durch ihn ein Anbringen des Abweiserelements an einer Maulkupplung ermöglicht ist, insbesondere indem er mit einem Hakenelement oder mit einem Kupplungsauge ausgebildet ist. Eine derartige Ausgestaltung des Heckbereichs eines Kipperfahrzeugs mit einer Kugelkopfkupplung und einer oberhalb von dieser vorgesehenen Maulkupplung ist insbesondere in Kipperfahrzeugen mit relativ niedrigen Nutzlasten üblich und erlaubt somit die eben beschriebene vorteilhafte Ausgestaltung des erfindungsgemäßen Abweiserelements.

Um die Flexibilität des erfindungsgemäßen Abweiserelements zu erhöhen und dieses für Kipperfahrzeuge mit unterschiedlich ausgebildeten Heckbereichen verwendbar zu machen, kann der Körperabschnitt längenverstellbar ausgebildet sein, beispielsweise teleskopierbar. Hierdurch wird ermöglicht, sowohl den Anbringungsbereich, der die eigentliche Anlagefläche für die Rückwand des Kipperfahrzeugs in ihrem heruntergeklappten Zustand bildet, als auch beispielsweise den Abstand zwischen den beiden Anbringungsbereichen in entsprechenden Ausführungsformen auf unterschiedlich gestaltete Heckbereiche von verschiedenen Typen von Kipperfahrzeugen anzupassen.

In ähnlicher Weise kann das erfindungsgemäße Abweiserelement ferner wenigstens ein Scharnierelement umfassen, welches zwischen dem ersten Anbringungsbereich und dem Körperabschnitt, zwischen dem Körperabschnitt und dem zweiten Anbringungsbereich oder zwischen zwei Teilabschnitten des Körperabschnitts vorgesehen ist, und dazu eingerichtet ist, ein Anpassen eines Winkels der entsprechenden beiden Komponenten zu ermöglichen. Auch hierdurch wird eine erhöhte Flexibilität eines erfindungsgemäßen Abweiserelements erzielt, da durch diese Maßnahme der Winkel zwischen den angesprochenen Komponenten auf die jeweiligen baulichen Begebenheiten im Heckbereich des mit dem erfindungsgemäßen Abweiserelements auszustattenden Kipperfahrzeugs eingestellt werden kann.

Insbesondere kann durch das gemeinsame Vorsehen eines längenverstellbaren Körperabschnitts und wenigstens eines Scharnierelements in Ausführungsformen von Kipperfahrzeugen mit sowohl einer Kugelkopfkupplung als auch einer Maulkupplung prinzipiell unabhängig von der Ausrichtung und dem Abstand zwischen den beiden genannten Kupplungen das Abweiserelement durch entsprechende Anpassung der Länge des Körperabschnitts und des Winkels des Scharnierelements montiert werden.

Um im Betrieb des erfindungsgemäßen Abweiserelements eine Beschädigung der klappbaren Rückwand bei einem Anlegen davon an dem Körperabschnitt oder dem Anbringungsabschnitt und insbesondere bei einem Aufprall davon während einer freien Kippbewegung zu verhindern, kann der Körperabschnitt und/oder erste Anbringungsabschnitt an seiner von der Kugelkopfkupplung abgewandten Seite wenigstens ein Anlageelement aus einem Weichmaterial tragen, welches ein beschädigungsfreies Anlegen der Rückwand daran ermöglicht. Während das Weichmaterial prinzipiell durch ein beliebiges Material gebildet sein kann, welches eine geringere Härte als die üblicherweise aus Metall und insbesondere Stahl gefertigte klappbare Rückwand aufweist, so kann hier insbesondere an den Einsatz von geeigneten Kunststoffen gedacht werden. Hierbei kann das Anlageelement je nach Gestaltung des Körperabschnitts und/oder des ersten Anbringungsabschnitts beispielsweise an diesen angeklebt oder in eine entsprechende Ausnehmung eingepasst sein.

Um ferner ein verbessertes Abgleiten der Rückwand bei einem Zurückschwenken des Kippbereichs in seine horizontale Ausrichtung zu ermöglichen und ein Schaben oder Kratzen zwischen dem Abweiserelement und der Rückwand zu verhindern, umfasst dieses ferner wenigstens ein Rollenelement, welches um eine im montierten Zustand des Abweiserelements im Wesentlichen horizontal ausgerichtete Achse rotierbar dem Körperabschnitt oder dem ersten Anbringungsbereich zugeordnet ist, wobei das Rollenelement vorzugsweise wenigstens an seiner Lauffläche aus einem Weichmaterial besteht, wobei hierbei ebenfalls vorzugsweise auf einen zu diesem Zweck geeigneten Kunststoff zurückgegriffen werden kann.

Um den seitlichen Halt des Abweiserelements an der Kugelkopfkupplung zu verbessern, kann der erste Anbringungsbereich davon ferner wenigstens eine Seitenwand umfassen, welche sich in dem montierten Zustand seitlich in Fahrzeugbreitenrichtung neben der Kugelkopfkupplung erstreckt.

Ein Beispiel für eine mögliche Ausgestaltung des ersten Anbringungsbereichs, welche eine sichere Befestigung des erfindungsgemäßen Abweiserelements an der Kugelkopfkupplung ermöglicht, kann derart gestaltet sein, dass der erste Anbringungsbereich ferner ein Arretierungselement umfasst, welches in einem arretierten Zustand die Kugelkopfkupplung hintergreift. Hierbei kann insbesondere in Ausführungsformen, in welchen der erste Anbringungsbereich zwei Seitenwände umfasst, welche einander an beiden Seiten der Kugelkopfkupplung in dem montierten Zustand gegenüberliegen, das Arretierungselement als Steckstift ausgebildet sein, welcher durch Bohrungen in den beiden Seitenwänden hindurchführbar und ggf. in dem arretierten Zustand gegen ein Herausfallen sicherbar ist.

Weitere Merkmale und Vorteile der vorliegenden Erfindung werden aus der nachfolgenden Beschreibung einer Ausführungsform davon deutlich, wenn diese zusammen mit den beiliegenden Figuren betrachtet wird. Diese zeigen im Einzelnen:
- Fig. 1: der oben bereits beschriebene Zustand eines Kipperfahrzeugs ohne das erfindungsgemäß Abweiserelement in einer Seitenansicht;
- Fig. 2: der Heckbereich des Kipperfahrzeugs aus Figur 1 in einer isometrischen Ansicht, wobei das erfindungsgemäße Abweiserelement montiert ist;
- Fig. 3: eine Detailansicht des erfindungsgemäßen Abweiserelements; und
- Fig. 4: eine Detailansicht ähnlich Fig. 3, jedoch von einer abgewandelten Variante des dort gezeigten Abweiserelements.

In Figur 2 ist erneut der Heckbereich des Kipperfahrzeugs 10 aus Figur 1 dargestellt, wobei jedoch in dem in Fig. 2 gezeigten Zustand ein Abweiserelement 100 zwischen der Kugelkopfkupplung 22 und der schräg darüber angeordneten Maulkupplung 24 installiert und an beiden befestigt ist. Ferner sind aufgrund der geänderten Perspektive der Figur 2 gegenüber der Figur 1 neben den bereits angesprochenen Komponenten des Flurförderzeugs 10, wie der Bordwand 14 und der Seitenwand 16, noch weitere Komponenten zu erkennen, wie beispielsweise ein Unterfahrschutz 26 oder die daran vorgesehene Montageplatte 28, welche mittels einer Mehrzahl von Bohrungen 30 ein Anbringen der Kugelkopfkupplung 22 in unterschiedlichen Höhenpositionen ermöglicht.

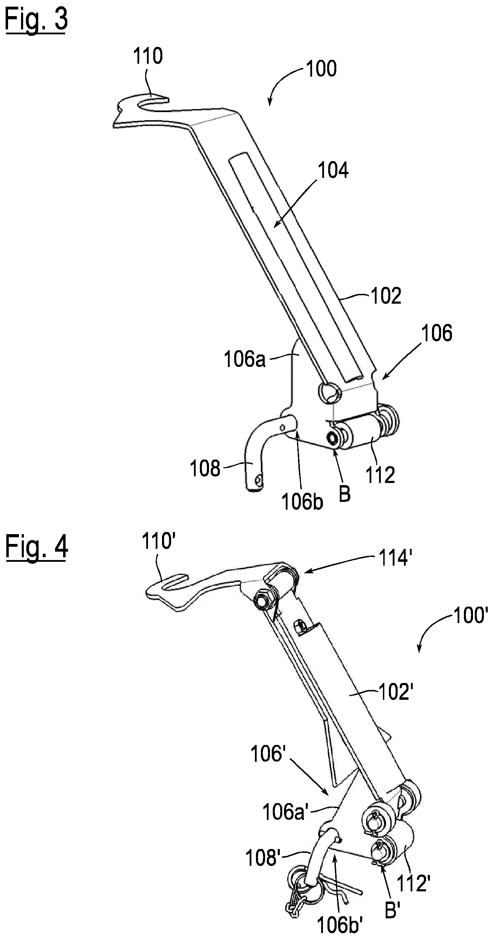

Wie nun in Fig. 2 und insbesondere auch in der Detailansicht aus Fig. 3 zu erkennen ist, umfasst das zwischen der Kugelkopfkupplung 22 und der Maulkupplung 24 vorgesehene Abweiserelement einen Körperabschnitt 102, mit einem daran vorgesehenen Anlageelement 104 aus einem Weichmaterial, welche in montiertem Zustand des Abweiserelements 100 eine Anlage für die Rückwand 16 bilden. Weiterhin umfasst das Abweiserelement 100 einen ersten Anbringungsbereich 106, welcher ein Anbringen des Abweiserelements 100 an der Kugelkopfkupplung 22 ermöglicht und hierzu zwei Seitenwände 106a sowie ein als Steckstift ausgebildetes Arretierelement 108 umfasst, welches durch zwei Durchbrechungen 106b in den beiden Seitenwänden 106a hindurchführbar ist.

Wenngleich in der in Fig. 3 dargestellten Ausführungsform nicht gezeigt, so könnte in Varianten des gezeigten erfindungsgemäßen Abweiserelements der Körperabschnitt 102 längenverstellbar, beispielsweise teleskopierbar, ausgebildet sein und/oder es könnte ein Scharnierelement vorgesehen sein, um den Winkel zwischen dem Anbringungsbereich 106 und dem Körperabschnitt 102, zwischen dem Körperabschnitt 102 und dem unten noch beschriebenen zweiten Anbringungsbereich 110 oder alternativ zwischen zwei Teilabschnitten des Körperabschnitts 102 anzupassen. Eine derartige, mit einem Scharnierelement ausgestattete Variante des Abweiserelements 100 wird weiter unten noch beschrieben und ist in Fig. 4 gezeigt.

In jedem Fall ist an dem dem ersten Anbringungsbereich 106 gegenüberliegenden Ende des Abweiserelements 100 der bereits erwähnte zweite Anbringungsbereich 110 vorgesehen, welcher als Hakenelement ausgebildet, und wie in Figur 2 zu erkennen, mit der Maulkupplung 24 des Kipperfahrzeugs 10 durch einfaches Einhängen verbindbar ist. Hier könnte in einer alternativen Variante auch ein Kupplungsauge als zweiter Anbringungsbereich vorgesehen sein, wobei jedoch das in Figur 3 dargestellte Hakenelement den Vorteil hat, dass zu einem Anbringen an der Maulkupplung kein Öffnen von dieser erforderlich ist.

Weiterhin sei darauf verwiesen, dass das Abweiserelement 100 im Bereich des ersten Anbringungsbereichs 106 ferner ein Rollenelement 112 umfasst, welches um eine in dem in Fig. 2 gezeigten montierten Zustand im Wesentlichen horizontal ausgerichtete Achse B drehbar ist und ein Abrollen der Rückwand 16 bei einem Zurückschwenken des Kippaufbaus 12 in dessen horizontale Ausrichtung ermöglicht, um ein Schleifen zwischen der Rückwand 16 und dem Abweiserelement 100 zu vermeiden und damit Beschädigungen oder unerwünschte Geräusche auszuschließen.

Zuletzt sei noch auf die Fig. 4 verwiesen, in welcher eine abgewandelte Variante des Abweiserelements 100 gezeigt und mit dem Bezugszeichen 100' bezeichnet ist. Hierbei sind identische oder äquivalente Komponenten der Variante 100' mit demselben Bezugszeichen wie die entsprechenden Komponenten der Ausführungsform 100 aus Fig.3, jeweils ergänzt um einen Apostroph, bezeichnet und auf eine Beschreibung dieser Komponenten soll verzichtet sein.

Die Variante 100' aus Fig. 4 unterscheidet sich von dem Abweiserelement 100 aus Fig. 3 lediglich dahingehend, dass auf das Vorsehen des Anlageelements 104 verzichtet worden ist, stattdessen jedoch ein Scharnierelement 114 vorgesehen ist, um den Winkel zwischen dem Körperabschnitt 102' und dem zweiten Anbringungsbereich 110' anpassen zu können. Somit bietet diese Variante eine erhöhte Flexibilität hinsichtlich einer Anpassbarkeit an unterschiedlich ausgebildete Heckbereiche von Fahrzeugen.

## Patentansprüche

1. Abweiserelement (100; 100') zur Verwendung im Bereich einer klappbaren Rückwand (16) eines Kipperfahrzeugs (10) mit einer Kugelkopfkupplung (22), umfassend:
- einen Körperabschnitt (102; 102'), welcher dazu eingerichtet ist, in montiertem Zustand des Abweiserelements (100; 100') eine Anlage für die Rückwand (16) in ihrem heruntergeklappten Zustand zu bilden; und
- einen ersten Anbringungsbereich (106; 106'), welcher dazu eingerichtet ist, ein Anbringen des Abweiserelements (100; 100') an der Kugelkopfkupplung (22) zu ermöglichen, um den montierten Zustand herzustellen;
wobei sich der Körperabschnitt (102; 102') des Abweiserelements (100; 100') in dem montierten Zustand wenigstens abschnittsweise oberhalb der Kugelkopfkupplung (22) erstreckt und diese wenigstens auf der zu der Rückwand (16) weisenden Seite bedeckt,
**dadurch gekennzeichnet, dass** es ferner wenigstens ein Rollenelement (112; 112') umfasst, welches um eine im montiertem Zustand des Abweiserelements (100; 100) im Wesentlichen horizontal ausgerichtete Achse (B; B')) rotierbar dem Körperabschnitt (102; 102') oder dem ersten Anbringungsbereich (106; 106') zugeordnet ist.

2. Abweiserelement (100; 100') nach Anspruch 1,
ferner umfassend einen zweiten Anbringungsbereich (110; 110'), welcher dazu eingerichtet ist, ein Anbringen des Abweiserelements (100; 100') an einer weiteren Komponente des Kipperfahrzeugs (10) in dem montierten Zustand zu ermöglichen, welche sich oberhalb der Kugelkopfkupplung (22) befindet.

3. Abweiserelement (100; 100') nach Anspruch 2,
wobei der zweite Anbringungsbereich (110; 110') dazu eingerichtet ist, ein Anbringen des Abweiserelements (100; 100') an einer Maulkupplung (24) zu ermöglichen, insbesondere indem er mit einem Hakenelement oder mit einem Kupplungsauge ausgebildet ist

4. Abweiserelement (100; 100') nach einem der vorhergehenden Ansprüche, wobei der Körperabschnitt (102; 102') längenverstellbar ausgebildet ist, beispielsweise teleskopierbar.

5. Abweiserelement (100; 100') nach einem der vorhergehenden Ansprüche, ferner umfassend wenigstens ein Scharnierelement (114), welches zwischen dem ersten Anbringungsbereich (106; 106') und dem Körperabschnitt (102; 102'), zwischen dem Körperabschnitt (102; 102') und dem zweiten Anbringungsbereich (110; 110' oder zwischen zwei Teilabschnitten des Körperabschnitts (102; 102') vorgesehen ist und dazu eingerichtet ist, ein Anpassen eines Winkels der entsprechenden beiden Komponenten zu ermöglichen.

6. Abweiserelement (100; 100') nach einem der vorhergehenden Ansprüche, wobei der Körperabschnitt (102; 102') und/oder der erste Anbringungsbereich (106; 106') an seiner von der Kugelkopfkupplung (22) abgewandten Seite wenigstens ein Anlageelement (104) aus einem Weichmaterial trägt, welches ein beschädigungsfreies Anliegen der Rückwand (16) daran ermöglicht.

7. Abweiserelement (100; 100') nach einem der vorhergehenden Ansprüche, wobei das Rollenelement (112; 112')wenigstens an seiner Lauffläche aus einem Weichmaterial besteht.

8. Abweiserelement (100; 100') nach einem der vorhergehenden Ansprüche, wobei der erste Anbringungsbereich (106; 106') ferner wenigstens eine Seitenwand umfasst (106a; 106a') , welche sich in montiertem Zustand seitlich in Fahrzeug-Breitenrichtung neben der Kugelkopfkupplung (22) erstreckt.

9. Abweiserelement (100; 100') nach einem der vorhergehenden Ansprüche, wobei der erste Anbringungsbereich (106; 106') ferner ein Arretierungselement (108; 108') umfasst, welches in einem arretierten Zustand die Kugelkopfkupplung (22) hintergreift.

10. Abweiserelement (100; 100') nach den Ansprüchen 8 und 9,
wobei zwei Seitenwände (106a; 106') vorgesehen sind und das Arretierungselement (108; 108') als Steckstift ausgebildet ist, welcher durch Bohrungen (106b; 106b') in den beiden Seitenwänden (106a; 106a') hindurchführbar und gegebenenfalls in dem arretierten Zustand gegen ein Herausfallen sicherbar ist.

## Claims

1. Deflector element (100; 100') for use in the area of a hinged rear wall (16) of a dump truck (10) with a ball-head coupling (22), comprising:
- a body section (102; 102') which is configured to form a support for the rear wall (16) in its folded-down state when the deflector element (100; 100') is installed; and
- a first mounting area (106; 106') which is configured to allow the deflector element (100; 100') to be attached to the ball-head coupling (22) in order to realise the installed state;
wherein the body section (102; 102') of the deflector element (100; 100') extends at least partially above the ball-head coupling (22) in the installed state and covers it at least on the side facing the rear wall (16),
**characterised in that** it further comprises at least one roller element (112; 112') which is rotatably associated with the body section (102; 102') or the first mounting area (106; 106') about an axis (B; B') that is substantially horizontally oriented in the installed state of the deflector element (100; 100).

2. Deflector element (100; 100') according to claim 1,
further comprising a second mounting area (110; 110') which is configured to enable the deflector element (100; 100') to be attached to a further component of the dump truck (10) in the installed state, and which is located above the ball coupling (22).

3. Deflector element (100; 100') according to claim 2,
wherein the second mounting area (110; 110') is configured to allow the deflector element (100; 100') to be attached to a jaw coupling (24), in particular by being formed with a hook element or with a coupling eye.

4. Deflector element (100; 100') according to any one of the preceding claims,
wherein the body section (102; 102') is designed to be length-adjustable, for example is designed to be telescopic.

5. Deflector element (100; 100') according to any one of the preceding claims, further comprising at least one hinge element (114) which is provided between the first mounting area (106; 106') and the body section (102; 102'), between the body section (102; 102') and the second mounting area (110; 110'), or between two subsections of the body section (102; 102'), and is configured so as to allow the angle of the corresponding two components to be adjusted.

6. Deflector element (100; 100') according to any one of the preceding claims,
wherein the body section (102; 102') and/or the first mounting area (106; 106') has at least one contact element (104) made of a soft material on its side facing away from the ball-head coupling (22), which allows the rear wall (16) to rest against it without damage.

7. Deflector element (100; 100') according to any one of the preceding claims,
wherein the roller element (112; 112') consists of a soft material at least on its bearing surface.

8. Deflector element (100; 100') according to any one of the preceding claims,
wherein the first mounting area (106; 106') further comprises at least one side wall (106a; 106a'), which in the mounted state extends laterally in the width direction of the truck next to the ball-head coupling (22).

9. Deflector element (100; 100') according to any one of the preceding claims,
wherein the first mounting area (106; 106') further comprises a locking element (108; 108'), which in a locked state engages behind the ball-head coupling (22).

10. Deflector element (100; 100') according to claims 8 and 9,
wherein two side walls (106a; 106') are provided and the locking element (108; 108') is designed as a plug pin which can be passed through bores (106b; 106b') in the two side walls (106a; 106a'), and can if necessary be secured against falling out in the locked state.

## Revendications

1. Élément déflecteur (100; 100') destiné à être utilisé dans la zone d'une paroi arrière rabattable (16) d'un véhicule à benne basculante (10) avec un attelage à boule (22), comprenant:
- une section de corps (102; 102') qui, à l'état monté de l'élément déflecteur (100; 100'), est configurée pour former un support pour la paroi arrière (16) dans son état rabattu; et
- une première zone de fixation (106; 106') qui est configurée pour permettre une fixation de l'élément déflecteur (100; 100') à l'attelage à boule (22) pour établir l'état monté;
dans lequel la section de corps (102; 102') de l'élément déflecteur (100; 100') s'étend au moins par sections au-dessus de l'attelage à boule (22) à l'état monté et le recouvre au moins du côté tourné vers la paroi arrière (16),
**caractérisé en ce qu'**il comprend en outre au moins un élément de rouleau (112; 112') qui est associé de manière rotative à la section de corps (102; 102') ou à la première zone de fixation (106; 106') autour d'un axe (B; B') sensiblement horizontal à l'état monté de l'élément déflecteur (100; 100).

2. Élément déflecteur (100; 100') selon la revendication 1, comprenant en outre une deuxième zone de fixation (110; 110'), qui est configurée pour permettre une fixation de l'élément déflecteur (100; 100') à un autre composant du véhicule à benne basculante (10) à l'état monté, qui se trouve au-dessus de l'attelage à boule (22).

3. Élément déflecteur (100; 100') selon la revendication 2, dans lequel la deuxième zone de fixation (110; 110') est configurée pour permettre une fixation de l'élément déflecteur (100; 100') à un accouplement à mâchoires (24), en particulier par le fait qu'elle est agencée avec un élément à crochet ou avec un œillet d'accouplement.

4. Élément déflecteur (100; 100') selon l'une des revendications précédentes, dans lequel la section de corps (102; 102') est agencée pour être réglable en longueur, par exemple télescopique.

5. Élément déflecteur (100; 100') selon l'une des revendications précédentes, comprenant en outre au moins un élément de charnière (114), qui est prévu entre la première zone de fixation (106; 106') et la section de corps (102; 102'), entre la section de corps (102; 102') et la deuxième zone de fixation (110; 110') ou entre deux sous-sections de la section de corps (102; 102') et est configuré pour permettre un ajustement d'un angle des deux composants correspondants.

6. Élément déflecteur (100; 100') selon l'une des revendications précédentes, dans lequel la section de corps (102; 102') et/ou la première zone de fixation (106; 106') porte, au niveau de son côté opposé à l'attelage à boule (22), au moins un élément de support (104) en un matériau souple qui permet un support sans détérioration de la paroi arrière (16) sur celui-ci.

7. Élément déflecteur (100; 100') selon l'une des revendications précédentes, dans lequel l'élément de rouleau (112; 112') consiste en un matériau souple au moins sur sa surface de roulement.

8. Élément déflecteur (100; 100') selon l'une des revendications précédentes, dans lequel la première zone de fixation (106; 106') comprend en outre au moins une paroi latérale (106a; 106a') qui, à l'état monté, s'étend latéralement dans le sens de la largeur du véhicule à côté de l'attelage à rotule (22).

9. Élément déflecteur (100; 100') selon l'une des revendications précédentes, dans lequel la première zone de fixation (106; 106') comprend en outre un élément de verrouillage (108; 108') qui, dans un état verrouillé, s'engage derrière l'attelage à rotule (22).

10. Élément déflecteur (100; 100') selon les revendications 8 et 9, dans lequel deux parois latérales (106a; 106') sont prévues et l'élément de verrouillage (108; 108') est agencé sous forme d'une goupille qui peut être insérée dans des alésages (106b; 106b') dans les deux parois latérales (106a; 106a') et, éventuellement, bloquée contre une chute dans l'état verrouillé.
